# EUROPEAN PATENT SPECIFICATION

(11) **EP 2 671 482 B1**
(45) Date of publication and mention of the grant of the patent: **06.05.2015**
(21) Application number: 12170777.2
(22) Date of filing: 05.06.2012
(51) Int. Cl.: A47J 37/06

(54) **A grill**
Grill
Barbecue

(43) Date of publication of application: 11.12.2013
(73) Proprietor: Koninklijke Philips N.V., 5656 AE Eindhoven (NL)
(72) Inventor: Van Aken, Timotheus Johannes Maria, 5600 AE Eindhoven (NL); Van Raalte, Margarita Zwanette, 5600 AE Eindhoven (NL)
(74) Representative: Damen, Daniel Martijn

(56) References cited:
- US-A- 5 016 608
- US-A- 5 413 032
- US-A1- 2011 031 234

## Description

### FIELD OF THE INVENTION

The present invention relates to a grill.

### BACKGROUND OF THE INVENTION

Grills are known for heating and/or cooking foodstuffs. Such a grill generally comprises a grill plate or griddle and a heater arranged to heat the plate. One such arrangement is a table top grill. A table top grill typically has an outer housing and a grill plate disposed at an upper end. The grill plate generally has an upper surface on which a food stuff to be heated and/or cooked. Such a grill plate is formed from a conductive material, for example aluminum or cast iron. The heater is disposed in the housing and positioned below the grill plate so that heat generated by the heater is transferred to the grill plate to heat the grill plate and therefore heat and/or cook the food stuff on the grill plate.

However, a problem with existing grills is that it is difficult to provide flavor to a foodstuff during cooking. One method is to pour a flavored substance, acting as a flavoring, for example a sauce or dried particles, over a food stuff on the grill. However, such a method generally leads to the flavored substance being distributed across the surface of the grill plate which then bums or evaporates before flavoring the food stuff. Alternatively, the operating temperature of the grill plate may not be sufficient to activate the flavored substance to release the flavor to the food stuff without burning a foodstuff located on the grill plate.

US 2011/031234 Al discloses a grill having a grilling plate with a high temperature region. A heater is received in a grove extending along the bottom of the grilling plate. The heater is retained in the grove along its length.

US 5 413 032 A discloses a grill with a heated plate and a number of heaters. The heaters are equally spaced from the heater and are arranged to provide a uniform heat distribution across the heated plate.

US 5 016 608 also discloses a grill with a heated plate and a heater for heating the heated plate. The heater is disposed below the plate and is equally spaced therefrom.

### SUMMARY OF THE INVENTION

It is an object of the invention to provide a grill which substantially alleviates or overcomes the problems mentioned above.

According to the present invention, there is provided a grill comprising a first heated element having a first heated surface, a second heated element having a second heated surface, and a heater configured to heat both the first heated element and the second heated element, wherein the first heated element and second heated element are configured so that the applied power to the second heated element per unit area of the second heated surface is greater than the applied power to the first heated element per unit area of the first heated surface.

Therefore, it is possible for the second heated element to be heated to a higher temperature than the second heated element, whilst being heated by the same heat source. It is therefore possible for a substance placed on the second heated surface to be heated to a higher temperature than another substance placed on the first heated surface.

The above arrangement enables two different heated surfaces, for example a grill plate and a heated cup, to be operated at two different temperatures whilst being heated by a single heat source. An advantage of this arrangement is that the number of required components of the grill are minimized. Therefore, ease of assembly and reliability of the grill is maximized.

The ratio of the applied power to the second heated element per unit area of the second heated surface to the applied power to the first heated element per unit area of the first heated surface may be at least 1.4:1.

The ratio of the applied power to the second heated element per unit area of the second heated surface to the applied power to the first heated element per unit area of the first heated surface may be less than 3:1.
The first heated element may be a grill plate. Therefore, it is possible to easily use the grill to cook and/or heat a food stuff.

A cavity may be formed in the second heated element and the second heated surface of the second heated element may be defined in the cavity.
An advantage of the above arrangement is that a substance to be heated is easily retained in contact with the second heated surface. Furthermore, the dispersion of a substance on the second heated element may be restrained.

The second heated element may comprise a base part and a side wall upstanding from and extending around the base part to form the cavity, the second heated surface being formed by the base part.

The thickness of the side wall may be less than or equal to 3mm.

An advantage of the above arrangement is that the transfer of heat to the sidewall from the base part is minimized. Therefore, the dispersion of heat from the second heated element is minimized.

An aperture may be formed in the first heated element and the second heated element may be received in the aperture.

Therefore, the arrangement of the first and second heated elements is simplified, and the second heated element is simply positioned to be heated by a heat source heating the first heated element.

The second heated element may be removable from the first heated element. The above arrangement allows the second heated element to be interchangeable with another second heated element. This allows different heated elements to be used, for example to provide heated elements which are configured for each second heated surface to heat to a different operating temperature. Furthermore, the second heated element is therefore easily removed for cleaning.

The second heated element may be spaced from the first heated element. Therefore, heat transfer from the second heated element to the first heated element is minimized. That is, heat loss from the second heated element to the first heated element is minimized.

The distance between a second face of the second heated element and the heater is less than the distance between a first face of the first heated element and the heater. The grill may further comprise a heater chamber, the heater being disposed in the heater chamber and the first and second faces being exposed in the heater chamber.

The above arrangement provides a simple arrangement for the heater to transfer heat to each of the first and second heated elements.

The first heated element may be spaced from the heater such that heat is transferred to the first heated element by convection and/or radiation.

The grill may be configured to transfer heat from the heater to the second heated element by conduction.

The second heated element may locate against the heater.

A channel may be formed in the second heated element which is configured to receive a section of the heater.

Therefore, the second heated element is supportable by the heater. Furthermore, the surface area of the second heated element in contact with the heater is increased and so the heat transfer to the second heated element from the heater is increased.

The grill may further comprise a controller which is configured to control operation of the heater. Therefore, operation of the heater and operation of the heated elements is easily controlled.

The grill may further comprise a sensor, wherein the controller may be configured to operate the heater to control the temperature of the first heated surface in response to the temperature determined by the sensor.

The controller may be configured to control operation of the heater to maintain the temperature of the first heated surface within a pre-determined temperature range. Therefore, the first heated surface is maintained at a temperature suitable for heating and/or cooking a foodstuff.

The controller may be configured to maintain the temperature of the first heated surface in a range between 200°C and 270°C.

The first heated element and the second heated element may be configured so that the temperature of the second heated surface operates in a range between 270°C and 400°C when the first heated surface is in a range between 200°C and 270°C.

The above arrangement allows the second heated surface to be maintained at a predetermined temperature, for example at a temperature for creating smoke from wood chips when the first heated surface is operated at a temperature suitable for heating and/or cooking a food stuff.

The grill may further comprise a recess in the first heated surface and a third heated surface defined in the recess.

These and other aspects of the invention will be apparent from and elucidated with reference to the embodiments described hereinafter.

### BRIEF DESCRIPTION OF THE DRAWINGS

Embodiments of the invention will now be described, by way of example only, with reference to the accompanying drawings, in which:
Figure 1 shows a diagrammatic plan view of a grill; and
Figure 2 shows a diagrammatic cross-sectional side view of part of the grill shown in Figure 1.

### DETAILED DESCRIPTION OF THE EMBODIMENTS

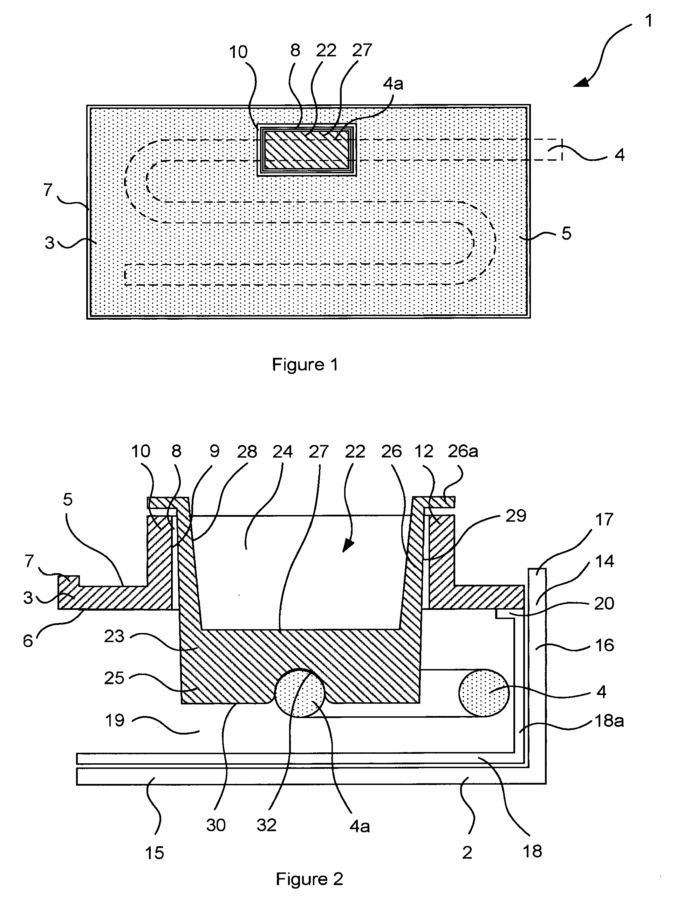

Referring to Figures 1 and 2, a grill 1 is shown. The grill 1 comprises a housing 2, a grill plate 3 and a heater 4.

The grill plate 3, acting as a first heated element, has an upper surface 5 and a lower face 6. The upper and lower surfaces 5, 6 extend generally parallel to each other. The upper surface 5 acts as a first heated surface. The first heated surface 5 is configured to receive a food stuff thereon. The first heated surface 5 is generally planar and has a plurality of ridges (not shown). The ridges (not shown) are integrally formed with and upstand from the first heated surface 5. The ridges extend parallel to each other and are uniformly spaced. Alternatively, the ridges are omitted, have a different arrangement or extend across a section of the first heated surface 5 only. A rim 7 upstands from and extends around the periphery of the first heated surface 5. The rim 7 may be omitted from one or more sides to allow liquids to drain from the first heated surface 5.

The lower face 6 is generally planar. However, the lower face may have protrusions or recesses formed therein to aid, for example, mounting and/or locating of the grill plate 3 in the housing 2, or to aid or reduce heat transfer to the grill plate 3.

An aperture 8 is formed in the grill plate 3. The aperture 8 extends through the grill plate 3. The aperture 8 has a side face 9. The side face 9 defines the edge of the aperture 8. In the present embodiment, the aperture 8 has an oblong shaped opening in plan view, however it will be understood that alternative shapes are possible. For example, in alternative embodiments the aperture 8 has a circular shaped opening in plan view or extends from an edge of the grill plate 3 (not shown).

An aperture wall 10 extends around the peripheral edge of the aperture 8. The aperture wall 10 upstands from the first heated surface 5. The aperture wall 5 has an inner side face which forms part of the aperture side face 9. The inner side face extends perpendicular to the lower face 6 of the grill plate 3. The aperture wall 10 is integrally formed with the grill plate 3. The space defined by the aperture wall 10 forms part of the aperture 8. Alternatively, the aperture wall 10 is omitted or is fixedly mounted to the grill plate 3. The aperture wall 10 defines a chimney or bore through the grill plate 3 from the lower face 6 of the grill plate 3 to the upper end 12 of the aperture wall 10.

The grill plate 3 is formed from aluminum. However, it will be appreciated that alternative suitable materials may be used, for example an aluminum alloy or cast iron. The grill plate is coated with a non-stick material to prevent food stuffs from sticking to the first heated surface 5, and to ease cleaning. The grill plate 3 has a generally uniform thickness. That is, the first heated surface 5 and lower face 6 extend parallel to each other to allow for an even temperature distribution at the first heated surface 5.

The grill plate 3 is removably mounted to the housing 2. Alternatively, the grill plate 3 is fixedly mounted to the housing 2. The housing 2 has an outer shell 14 forming a bottom wall 15 and a side wall 16 upstanding from and around the bottom wall 15. The outer shell 14 is formed from a rigid plastic, or another suitable material. The housing 2 has an opening at its upper end. The opening is defined by an upper edge 17 of the outer shell 14. The grill plate 3 is disposed at or towards the upper end of the housing 2, and extends across the opening. The grill plate 3 is supported on the housing 2.

A heating chamber 19 is formed in the housing 2. The heating chamber 19 is defined by the housing 2 and the grill plate 3. That is, the grill plate 3 encloses the heating chamber 19 at the upper end of the heating chamber 19. The lower face 6 of the grill plate 3 is exposed to the heating chamber 19. A reflector 18 is disposed in the housing 2. The reflector 18 forms a lower wall of the heating chamber 18. Alternatively, the reflector 18 is disposed in the heating chamber 19. The reflector 18 acts as a reflective element to reflect heat towards the grill plate 3. The reflector also has a peripheral side wall 18a which upstands in the outer shell 14 and the heating chamber 19 is defined by the reflector 18. A shoulder 20 formed at an upper end of the reflector side wall 18a supports the grill plate along the periphery of the grill plate 3. However, it will be understood that alternative support arrangements are envisaged.

The heater 4, acting as a heating means, is disposed in the housing 2. The heater 4 is disposed in heating chamber 19. The heater 4 is disposed between the grill plate 3 and the reflector 18. The heater 4 is connected to a power supply unit (not shown) and a controller (not shown). The controller and power unit are disposed in the housing 2. The controller is configured to control operation of the heater 4. A sensor (not shown) is positioned to detect the temperature of the first heated surface 5 of the grill plate 3. The controller is configured to control operation of the heater in response to the temperature detected by the sensor. The sensor (not shown) may be positioned to directly detect the temperature of the first heated surface 5. Alternatively, the sensor may indirectly detect the temperature of the first heated surface 5, and the sensor and/or controller determines the temperature of the first heated surface 5 in response to the temperature detected by the sensor. For example, the sensor may be disposed to detect the temperature of another part of the grill plate, such as the lower face 6, the temperature in the heating chamber 19 or food stuff receiving space or the temperature of the reflector 18.

The heater 4 is an elongate tubular member or rod. The elongate member in the present embodiment comprises a single tubular member which is bent to follow a generally sinuous path in the heating chamber 19. However, it will be understood that the heater 4 may have an alternative arrangement. For example, the elongate tubular member may follow a helical path in the heating chamber 19. Alternatively, the heater 4 may comprise two or more tubular members disposed in the heating chamber 19 which have a uniform output per unit length of the tubular member, and are controlled together, i.e. by a single controller.

The heater 4 is spaced from the grill plate 3. The heater 4 is maintained at a uniform distance from the grill plate 3 along its length to ensure a uniform temperature distribution across the first heated surface 5, when the grill plate 3 is disposed on the housing 2. That is, the longitudinal axis of the heater 4, or the plane along which the heater 4 is disposed, extends parallel to the plane of the grill plate 3.

A section 4a of the heater 4 passes below the aperture 8 formed in the grill plate 3 when the grill plate 3 is disposed on the housing 2, as shown in Figures 1 and 2.

The grill 1 further comprises a cup 22. The cup 22 acts as a second heated element. The cup 22 has a body 23 and a cavity 24 formed in the body 23. The body 23 of the cup 22 has a base part 25 and a side wall 26. The side wall 26 upstands from and extends around the base part 25. The cavity 24 is defined by an upper face 27 of the base part 25 and an inner surface 28 of the cup side wall 26. The inner surface 28 of the cup side wall 26 diverges away from the base part upper surface 25. The cup side wall 26 also has an outer surface 29. That is, the thickness of the cup side wall 26 reduces towards an upper end of the cup 22. The cup side wall 26 is configured to minimize heat transfer from the base part 25 to the side wall 26, and to minimize heat loss from the side wall 26. The cup side wall 26 has a maximum thickness between the inner surface 28 and the outer surface 29 of 3mm. It will be appreciated that the heat transfer from the base part 25 to the side wall 26 may be minimized by alternative means. For example, the inner or outer surfaces 28, 29 may be stepped so that the wall thickness reduces away from the base part 25. Alternatively, a region of reduced thickness, such as a circumferentially extending hollow formed in one or both of the inner and outer surfaces of the cup side wall, may extend around the side wall 26 proximate to the base part 25.

A cup rim 26a extends around the upper end of the cup side wall 26. The cup rim 26a extends outwardly from the side wall 26. The cup rim 26a aids removal of the cup 22 from the aperture 8.

The upper face 27 of the base part 25 acts as a second heated surface. The cavity 24 is configured to receive, for example, wood chips or a liquid therein so that the wood chips are in contact with and are heated by the second heated surface 27. The second heated surface 25 is generally planar.

The base part 25 also has a bottom face 30. A base part side face extends from the bottom face 30 to the outer surface 29 of the side wall 26. A channel 32 is formed in the base part 25. The channel 32 extends into the base part 25 from the bottom face 30. The shape of the channel 32 conforms to the shape of the section of the heater 4 which is disposed below the aperture 8 formed in the grill plate 3. The channel 32 is configured to receive the section of the heater 4 disposed below the aperture 8.

The cup 22 is formed from die-cast aluminum. Alternatively, other suitable materials are used. The use of aluminum can aid the prevention of local high temperatures, which could may cause substances in the cavity 24 to bum at specific spots, for example wood chips. The cup 22 has a polished finish to ease cleaning. Alternatively, the cup is coated with a non-stick material to prevent food stuffs from sticking to it, and to ease cleaning. The base part 25 has a generally uniform thickness to allow for an even temperature distribution at the upper face 27 of the base part 25 or second heated surface.

In the present embodiment, the cup 22 is generally oblong in plan view. However, it will be understood that alternative shapes are possible. For example, in an alternative embodiment the cup 22 is circular in plan view. The outer dimensions of the cup 22 correspond to the inner dimensions of the aperture 8. That is, the size of the aperture 8 in width and breadth is greater than the corresponding width and breadth of the outer surface 29 of the cup 22. When the cup 22 is received in the aperture 8, the outer surface 29 of the cup 22 is spaced from the side face 9 of the aperture 8. Therefore, the cup 22 is not in direct contact with the grill plate 3. However, it will be understood that the cup 22 is configured to extend below the lower face of the grill plate 3. That is, the lower end of the cup 22 is configured to extend from the aperture 9 through the opening to the aperture on the lower side of the grill plate 3.

One or more spacer elements (not shown) extend from the outer surface 29 of the cup 22. The spacer elements (not shown) may be ribs, flanges or protuberances extending from the outer surface 29 of the cup 22. The spacer elements (not shown) are configured to locate against the grill plate 3 to space the cup 22 received in the aperture 8 from the grill plate 3. Alternatively, one or more spacer elements (not shown) extend from the grill plate 3 and locate against the cup 3, when the cup is received in the aperture 8. The or each spacer element (not shown) also acts as a positioning element to locate the cup with respect to the grill plate 3. The or each spacer element may also be configured to position the cup 22 relative to the heater 4.

The spacer elements restrict the transfer of heat from the cup 22 to the grill plate 3 and so reduce the dissipation of heat from the cup 22. In one embodiment, the spacer elements are formed from an insulating material. This minimizes the heat transfer from the cup 22 to the grill plate 3. The spacer elements 22 are configured to have a minimal contact with the respective cup 22 or grill plate 3 to minimize conduction between the cup 22 and the grill plate. Alternatively, or as well as, the spacer elements 22 restrict the flow of air between the cup 22 and the grill plate 3 to minimize heat loss from the cup 22 by convection.

The grill 1 further comprises a cover (not shown). The cover is hingedly mounted to the housing 2 and is configured to extend over the grill plate 3 so that the grill plate is enclosed. The cover (not shown) is spaced from the first heated surface 5 of the grill plate 3. A cooking space or food stuff receiving space is defined between the cover and the first heated surface 5. A vent (not shown) is provided in the cover to allow the flow of gases from the cooking space. A filter (not shown) is provided at the vent (not shown) to restrict the passage of, for example, smoke, particles and smells from the grill 1 to outside the grill 1.

Operation of the grill will now be described with reference to Figures 1 and 2.

When the grill 1 is assembled, the grill plate 3 is received on the housing 2 and is mounted at the upper end of the outer shell 14. The grill plate 3 is positioned on the housing 1 to minimize any gaps between the grill plate 3 and the housing 2. Therefore, the loss of heat by air flow from the heating chamber 19 is minimized. The heater 4 is disposed in the heating chamber 19 defined in the housing 2. The heater 4 is disposed between the grill plate 3 and the reflector 18 disposed in the housing 2. That is, the reflector 18 is disposed on an opposing side of the heater 4 to the grill plate 3 and cup 22. Therefore, heat emitted by the heater 4 away from the grill plate 3 and cup 22 is reflected by the reflector 18 back towards the grill plate 3 and cup 22.

The lower face 6 of the grill plate 3 is exposed in the heating chamber 19. The lower face 6 of the grill plate 3 faces the heater 4. The heater 4 is spaced from the lower face 6 of the grill plate 3. Therefore, the grill plate 3 is not in contact with the heater 4. It will be understood that when the heater is operated, heat is transferred to the grill plate 3 by convection and radiation. However, heat transfer to the grill plate 3 by conduction is restricted. The outer shell 14 of the housing is formed from an insulating material, for example a rigid plastic.

A user inserts the cup 22 into the aperture 8 through the upper opening of the aperture 8 at the upper end of the aperture wall 10. The cup 22 is positioned in the aperture 8. The cup 22 is mounted in the aperture 8. The lower end of the cup 22 extends through the lower opening of the aperture formed in the lower face 6 of the grill plate 3. The cup therefore protrudes from the grill plate 3 into the heating chamber 19. In the present embodiment, the lower end of the cup 22 extends to and abuts the heater 4. That is, the cup 22, acting as a second heated element, is disposed in contact with the heater 4. The section of the heater 4 which is disposed below the aperture 8 formed in the grill plate 3 is received in the channel 32 formed in the base part 25 of the cup 22. Therefore, the surface of the section of the heater 4 lies against the surface of the channel 32. When the heater is operated, heat is able to be transferred to the cup 22 from the heater 4 by conduction. The section of the heater 4 received in the channel 32 also supports the cup 22, and so the cup 22 is retained in position. The or each spacer element (not shown) restricts contact of the cup 22 with the grill plate 3 and maintains orientation of the cup 22.

In an alternative embodiment, the cup 22 is supported by the grill plate 3, or by alternative support means (not shown). In such an embodiment, the cup 22 is not in contact with the heater 4. That is, the cup 22 is spaced from the heater 4. The section of the heater 4 below the aperture 8 is receivable in the channel 32 formed in the base part 25 of the cup 22; however the cup 22 is supported so that the section of the heater is spaced from the bottom face 30 of the cup 22. Therefore, the cup 22 is spaced from the heater 4. However, the cup 22 is disposed so that the distance between the bottom face 30 of the base part 25 of the cup 22 is less than the distance between the lower face 6 of the grill plate 3. The channel may be omitted.

A substance to be heated is placed in the cavity 24 formed in the cup 22. In the present arrangement, it is envisaged that the grill 1 is configured to receive and heat wood chips. That is, the arrangement of the heater 4, grill plate 3 and cup 22 is configured to heat wood chips received in the cup 22 to a predetermined temperature range. The temperature range is defined so that the wood chips generate smoke when they are within the defined temperature range. However, it will be understood that alternative substances, such as flavorants, may be used which are activated when heated to produce an effect on a food stuff heated and/or cooked on the grill plate 3. For example, herbs and flavored liquids may be placed in the cup 22 which, when heated, impart a flavor on a food stuff placed in the grill plate 3 to be heated and/or cooked.

In the present embodiment, a user places wood chips are in the cavity 24 formed by the cup 22. The wood chips in the cavity 23 are disposed in contact with the second heated surface 27 formed by the upper face of the base part 25. A user input (not shown) is operated by a user to operate the grill. The controller operates the heater 4 to generate heat. A food stuff to be heated and/or cooked may be placed on the first heated surface 5 of the grill plate 3 prior to or during operation of the grill 1.

In response to a user input, the controller operates the heater 4. Upon operation of the heater 4, heat is generated by the heater 4. The heater 4 has a defined heat transfer or power output per unit length of the heater tubular member. For example, a 2000W heater having a tubular member length of 1000mm will have a heat transfer or power output per unit length of 2W/mm.

Operation of the heater causes the transfer of heat to the grill plate 3 and cup 22. The lower face 6 of the grill plate 3 is spaced from the heater 4. Heat is transferred to the grill plate 3 by convection and radiation. Heat transfer occurs through direct transfer from the heater and by indirect transfer through radiation reflecting on the reflector 18 disposed below the heater 4 in the heating chamber 19. The cup 22 is in contact with the heater 4. Therefore, when the heater 4 is operated, heat is transferred to the cup 22 by conduction. Heat also transfers to the cup 22 by radiation and convection. In one alternative embodiment, the cup 22 is spaced from the heater 4. Therefore, heat is transferred to the cup by convection and radiation only. However, it will be understood that the distance between the cup 22 and the heater 4 is smaller than the distance between the grill plate 3 and the heater 4. In another alternative embodiment, a conductive element is disposed between the heater 4 and the cup 22 so that heat is transferred to the cup via conduction of heat through the conductive element.

The controller (not shown) operates the heater 4 until the first heated surface 5 of the grill plate 3 reaches a predetermined first temperature, for example 250°C. The temperature of the first heated surface 5 is determined by the temperature detected by the sensor (not shown). When the first temperature is reached, operation of the heater 4 is stopped. That is, the controller operates the heater in an "off state".

The controller (not shown) is configured to operate the heater 4 so that the temperature of the first heated surface 5 is maintained within a temperature range of 200°C and 270°C during operation of the grill 1. This temperature range is set to ensure that a food stuff disposed on the first heated surface 5 is heated and/or cooked without the food stuff burning. The sensor and controller may be a conventional thermostat.

In the present embodiment, the heater 4 is configured to have an output so that the ratio of the heater 4 operating in its "on" state to its "off' state is 1:4. This ensures that the time taken for the first heated surface 5 to reach its operating temperature range is minimised.

As explained above, heat is transferred from the heater 4 to the cup 22 as heat is transferred from the heater 4 to the grill plate 3. The grill plate 3, heater 4 and cup 22 are arranged so that the applied power to the cup 4 per unit area of the second heated surface 27 is greater than the applied power to the grill plate 3 per unit area of the first heated surface 5 of the grill plate 3. Therefore, the second heated surface 27 of the cup 22 reaches a higher operating temperature than the first heated surface 5 of the grill plate 3. The applied power to the cup 22 is defined as the power output of the section of the heater 4 configured to locate against or adjacent to the cup 22.

The power output of the section of the heater 4 configured to locate against or adjacent to the cup 22 is calculated by determining the power output per unit length of the heater 4, for example a heater having a total power output of 2000W and a tubular member length of 2000mm will have a power output per unit length of 1 W/mm, and by multiplying the power output per unit length by the length of the section of the heater tubular member located against or adjacent to the cup 22.

Similarly, the applied power to the grill plate 3 is defined as the power output of the heater 4 disposed in the heating chamber minus the power output of the section of the heater 4 configured to locate against or adjacent to the cup 22.
The grill plate 3 and cup 22 are disposed relative to the heater and are configured so that the heater 4 heats the second heated surface 27 to operate in a temperature range between 270°C and 400°C when the heater 4 heats the first heated surface 5 to operate in a temperature range between 200°C and 270°C.

The temperature range of the second heated surface 27 is determined to ensure efficient smoke production by the wood chips located against the second heated surface 27 in the cup 22. It will be understood that the wood chips will become activated and begin to smoke only once the wood chips have reached a minimum temperature. It has been determined that the minimum temperature at which smoke is generated is achieved when the second heated surface 27 is at 270°C. Furthermore, it will also be understood that there is a maximum temperature which the second heated surface 27 should not exceed to prevent toxic substances being produced by the wood chips and/or ignition of the wood particles. It has been determined that the maximum temperature is 400°C. Therefore, it will be understood that the grill 1 is configured to operate the second heated surface 27 of the cup 22 in a temperature range of 270°C to 400°C. This range ensures the production of smoke by different kind and sizes of wood chips, whilst preventing ignition of wood chips and/or toxic fumes.

As mentioned above, the grill 1 is configured so that the ratio of the applied power transferred to the grill plate 3 and cup 22 by the heater 4 is such that the second heated surface 27 operates in a temperature range between 270°C and 400°C when the first heated surface 5 operates in a temperature range between 200°C and 270°C. It will be understood that the relationship between the temperature of the first and second heated surfaces 5, 27 is dependent on a number of parameters. For example, the relationship between the temperature of the first and second heated surfaces 5, 27 is dependent on the ratio of the surface area of the first heated surface area 5 of the grill plate 3 and the second heated surface 27 of the cup 22, the respective masses of the grill plate 3 and the cup 22, the output of the heater 4, the relative distances between the heater 4 and the grill plate 3 and the heater 4 and the cup 22, the material and the surface finish of the heater 4 and the cup 22.

It will be understood that the temperature of cup 22 and therefore the second heated surface 27 is dependent on the applied power transferred to the cup 22from the heater 4, and the quantity of heat dissipated from the cup 22 which is described by the thermal resistance of the cup 22.

In the present embodiment, the applied power to the cup 22 from the heater is dependent primarily on the length of the section 4a of the tubular member of the heater 4 received in the channel 32 formed in the base part 25 of the cup 22 and the applied power per unit length of the section 4a. The input is a result of the area of the cup 22 abutting the tubular member of the heater 4a. In the present embodiment a material with a low radiation emission is used to form the cup 22 resulting in a high thermal resistance, for example, aluminum. Convective and conductive heat dissipation from the cup 22 is minimized by the one or more spacer elements (not shown) extending from the outer surface 29 of the cup 22 to space the cup 22 from the grill plate 3. Therefore, contact between the cup 22 and the grill plate 3 is reduced or eliminated. Furthermore, the circulation of air is minimized by the spacer elements. Furthermore, the thermal resistance of the cup is maximized by reducing the surface area of the cup in comparison to the area of the cup in contact with the heater 4, and by minimizing the thickness of the side wall 26 of the cup 22 so that the heat is retained in the base part 25 of the cup 22.

In order to aid maintaining the temperature of the second heated surface 27 within the desired operating temperature range, despite the cyclical operation of the heater 4, the base part 25 of the cup 22 is formed to have a substantive mass. That is, the base part 25 of the cup is configured to have a high heat capacity. This arrangement also dampens the hysteresis for the cup and helps to avoid the cup material from melting on the hot heater. The heat is adsorbed, and distributed fast preventing melting if the heater tubular member exceeds the melting temperature of the material forming the cup.

It will be understood that when the heater is in its "off' state, for example when the maximum temperature of the first heated surface is determined, the grill plate 3 and cup 22 (and therefore the first and second heated surfaces 5, 27) will cool at different rates. In particular, the cup 22 will cool at a faster rate compared to the grill plate 3 because the cup 22 is at a higher temperature to the grill plate 3. However, due to the cup's heat capacity, the temperature of the second heated surface is maintained above its minimum temperature until the controller operates the heater in its "on" state" again. Therefore, there is no break in the production of smoke despite the cyclical operation of the heater.

When the heater 4 is operated, the grill plate 3 and cup 22 are configured so that the applied power to the cup 22 per unit area of the second heated surface 27 is greater than the applied power to the grill plate per unit area of the first heated surface 5. That is, the applied power to the cup divided by the surface area of the second heated surface 27 is greater than the applied power to the grill plate 3 divided by the surface area of the first heated surface 5.

As described above, the applied power to the cup 22 is dependent on, for example, the positioning of the cup 22 relative to the heater 4 and the length of the section 4a of the heater tubular member received in the channel 32 of the cup base part 25. Furthermore, it will be understood that the applied power to the cup 22 from the heater 4 is maximised by the heater 4 being in contact with the cup 22. Similarly, the applied power to the grill plate 3 is dependent on, for example, the spacing of the grill plate 3 away from the heater 4 and the length of the section 4a of the heater tubular member that is not received in the channel 32 of the cup base part 25. It will also be understood that the applied power to the grill plate 3 and cup 22 is dependent on the time of operation of the heater 4.

In the present embodiment, the grill is configured so that the ratio of the applied power to the cup 22 per unit area of the second heated surface 27 to the ratio of the applied power to the grill plate 3 per unit area of the first heated surface 5 is at least 1.5:1 and less than 3:1.

With the above arrangement, the grill plate 3, heater 4 and cup 22 are configured so that the second heated surface operates at a higher temperature to the first heated surface when the heater is operated. In the present embodiment, the second heated surface 27 operates in a temperature range between 270°C and 400°C when the first heated surface 5 operates in a temperature range between 200°C and 270°C. This condition is achieved when the grill 1 following initial operation of the grill when the grill is operating in a steady state. In this state, the temperature of the second heated surface 27 is maintained at between 270°C and 400°C despite the cyclical operation of the heater 4. Therefore, wood chips in the cavity 24 of the cup 22 are heated to a sufficient temperature for the wood chips to generate smoke. A user places a food stuff on the first heated surface 5 of the grill plate 3 and closes the cover (not shown). Therefore, the smoke produced by the wood chips is contained by the cover and is prevented from dissipating. The smoke then fills the cooking space or food stuff receiving space which is defined between the cover and the first heated surface 5. The smoke is then able to flavor the food stuff.

It will be appreciated that the food stuff on the first heated surface 5 is heated and/or cooked by the heat transferred to the food stuff from the first heated surface 5 during operation of the grill 1. The heater 3 is operated by the controller in response to the temperature of the first heated surface determined by the sensor. Therefore, the temperature of the first heated surface 5 is maintained between 200°C and 270°C.

Once a user has determined that the food stuff is suitably heated and/or cooked, the user lifts the cover (not shown) and removes the food stuff from the first heated surface 5. The user then turns off the grill 1, such that the controller does not operate the heater. Once the grill plate 3 and cup 22 have cooled down, the cup 22 is removable from the grill plate 3 for cleaning, and the grill plate 3 is removable from the housing 2 for cleaning.

It will be understood that the heater may be operated in different modes. For example, the controller may be configured to reduce the output of the heater, or reduce the average output of the heater so that applied power to the first and second heated elements is reduced. In this mode of operation, the second heated surface of the cup does not reach a temperature sufficient to cause the contents of the cup to generate smoke. In such a mode, the controller is able to control the heater to maintain the grill plate at different temperatures, but without smoke being generated. In the present embodiment, the average power output of the heater is determined by the controller controlling the ratio of time that the heater is operated in its 'on' and 'off' states. For example, the first and second heating surfaces may be operated in a reduced temperature mode by the controller reducing the time that the heater operates in its 'on' state. In a non-smoking mode the temperature of the second heated surface falls below the temperature threshold at which smoking occurs.

Although in the above described embodiments, the second heated element is a cup, it will be understood that alternative arrangements are envisaged. For example, the second heated element may be a block with an upper planar surface or a plate.

Although in the above described embodiments the base part and the side wall are integrally formed, it will be understood that in an alternative embodiment the side wall is a separate component which is fixedly mounted to the cup. The side wall may be formed of a different material to the base part. In such an arrangement, the side wall is formed from a material with a higher thermal resistance to the base part. Alternatively, or in combination with, the thickness of the side wall of the cup may be reduced proximate to the base part. An advantage of these arrangements is that it increases the thermal resistance so that heat loss from the cup is reduced.

It will be understood that the cup being in contact with the heater and the distance between the cup and the heater may be adjustable to change the operating temperature of the second heated surface of the cup.

It will be understood that the cup may be interchangeable. The cup can be interchanged with another cup with different dimensions. For example, the height of the smoke cup can determines the duration of the wood chips smoking.

Although in the above described embodiments the cavity of the cup is open, it will be understood that a lid may be disposed over the opening to the cavity. In such an embodiment, one or more holes are formed in the lid or the cup. Alternatively, the lid may be maneuverable to adjust the size of the opening to the cavity. This allows the quantity of smoke generation, and air flow in the cavity to be controlled.

Although in the above described embodiments the cup has a single cavity, it will be understood that a cup with two or more cavities may be used. Furthermore, it will be understood that in an alternative embodiment to the forgoing the grill may have two or more cups.

The grill 1 described above may also have a recess formed in the grill plate (not shown). In such an arrangement, the recess is formed to receive a liquid which is heated to produce steam in the cooking space. A lip upstands around the periphery of the recess, although it will be understood that the lip may be omitted. The lip enables the quantity of liquid to be held in the recess to be maximized. The recess is integrally formed with the grill plate.

The recess is formed by a basin (not shown) integrally formed with the grill plate. The basin extends from the lower face 6 of the grill plate 3. That is, the basin extends from the lower side of the grill plate 3 into the heated chamber 19 when the grill plate 3 is assembled with the housing 2. An outer surface of the basin is exposed to the heated chamber 19. The basin (not shown) is disposed proximate to an edge of the grill plate 3 and the heater is arranged so that the basin is positioned to one side of the heater, spaced from the heater. Therefore, a side surface of the basin faces the heater. The basin is also heated by conduction from the grill plate. However, other arrangements are envisaged. An inner surface of the recess acts as a third heated surface. When the grill plate is heated, the third heated surface is heated at the approximately the same rate as the first heated surface. Therefore, the temperature of the third heated surface is lower than that of the second heated surface of the cup. The rate of evaporation of a liquid placed in the recess formed by the basin is lower than the rate of evaporation of a liquid placed in the cup. Furthermore, the heat capacity of the grill plate maximizes the third heated surface's heat retention when the heater is in its 'off' state.

Alternatively, the recess is formed by a removable component which locates in or through the grill plate so that it is mounted there against. Therefore, there is a good thermal conductivity between the removable component and the grill plate. It will be appreciated that the term "comprising" does not exclude other elements or steps and that the indefinite article "a" or "an" does not exclude a plurality. A single processor may fulfill the functions of several items recited in the claims. The mere fact that certain measures are recited in mutually different dependent claims does not indicate that a combination of these measures cannot be used to an advantage. Any reference signs in the claims should not be construed as limiting the scope of the claims.

Although claims have been formulated in this application to particular combinations of features, it should be understood that the scope of the disclosure of the present invention also includes any novel features or any novel combinations of features disclosed herein either explicitly or implicitly or any generalization thereof, whether or not it relates to the same invention as presently claimed in any claim and whether or not it mitigates any or all of the same technical problems as does the parent invention. The applicants hereby give notice that new claims may be formulated to such features and/or combinations of features during the prosecution of the present application or of any further application derived therefrom.

## Claims

1. A grill (1) comprising a first heated element (3) having a first heated surface (5), a second heated element (22) having a second heated surface (27), and a heater (4) configured to heat both the first heated element and the second heated element, **characterized in that** the distance between the first heated element (3) and the heater (4) is greater than the distance between the second heated element (22) and the heater (4) so that the applied power to the second heated element per unit area of the second heated surface (27) is greater than the applied power to the first heated element per unit area of the first heated surface (5).

2. A grill according to claim 1, wherein the ratio of the applied power to the second heated element (22) per unit area of the second heated surface (27) to the applied power to the first heated element (3) per unit area of the first heated surface (5) is at least 1.4:1.

3. A grill according to claim 1, wherein the ratio of the applied power to the second heated element (22) per unit area of the second heated surface (27) to the applied power to the first heated element (3) per unit area of the first heated surface (5) is less than 3:1.

4. A grill according to claim 1, wherein a cavity (24) is formed in the second heated element (22) and the second heated surface (27) of the second heated element is defined in the cavity.

5. A grill according to claim 4, wherein the second heated element (22) comprises a base part (25) and a side wall (26) upstanding from and extending around the base part to form the cavity (24), the second heated surface (27) being formed by the base part.

6. A grill according to claim 5, wherein the thickness of the side wall is less than or equal to 3mm.

7. A grill according to claim 1, wherein an aperture (8) is formed in the first heated element (3) and the second heated element (22) is received in the aperture.

8. A grill according to claim 1, wherein the second heated element (22) is spaced from the first heated element (3).

9. A grill according to claim 1, wherein the first heated element (3) is spaced from the heater (4).

10. A grill according to claim 1, configured to transfer heat from the heater (4) to the second heated element (22) by conduction.

11. A grill according to claim 1, wherein a channel (32) is formed in the second heated element (22) which is configured to receive a section of the heater (4).

12. A grill according to claim 1, further comprising a controller configured to control operation of the heater (4).

13. A grill according to claim 12, further comprising a sensor, wherein the controller is configured to operate the heater (4) to control the temperature of the first heated surface (5) in response to the temperature determined by the sensor.

14. A grill according to claim 1, the first heated element (3) and the second heated element (22) being configured so that the second heated surface (27) operates in a temperature range between 270°C and 400°C when the first heated surface (5) is operating in a temperature range between 200°C and 270°C.

15. A grill according to claim 1, further comprising a recess in the first heated surface and a third heated surface defined in the recess.

## Patentansprüche

1. Grill (1), umfassend ein erstes Heizelement (3) mit einer ersten Heizoberfläche (5), ein zweites Heizelement (22) mit einer zweiten Heizoberfläche (27) sowie eine Heizvorrichtung (4), die so eingerichtet ist, dass sie sowohl das erste Heizelement als auch das zweite Heizelement erhitzt, **dadurch gekennzeichnet, dass** der Abstand zwischen dem ersten Heizelement (3) und der Heizvorrichtung (4) größer als der Abstand zwischen dem zweiten Heizelement (22) und der Heizvorrichtung (4) ist, so dass die dem zweiten Heizelement pro Flächeneinheit der zweiten Heizoberfläche (27) zugeführte Energie größer als die dem ersten Heizelement pro Flächeneinheit der ersten Heizoberfläche (5) zugeführte Energie ist.

2. Grill nach Anspruch 1, wobei das Verhältnis der dem zweiten Heizelement (22) pro Flächeneinheit der zweiten Heizoberfläche (27) zugeführte Energie zu der dem ersten Heizelement (3) pro Flächeneinheit der ersten Heizoberfläche (5) zugeführte Energie mindestens 1,4:1 beträgt.

3. Grill nach Anspruch 1, wobei das Verhältnis der dem zweiten Heizelement (22) pro Flächeneinheit der zweiten Heizoberfläche (27) zugeführte Energie zu der dem ersten Heizelement (3) pro Flächeneinheit der ersten Heizoberfläche (5) zugeführte Energie weniger als 3:1 beträgt.

4. Grill nach Anspruch 1, wobei in dem zweiten Heizelement (22) ein Hohlraum (24) ausgebildet ist und die zweite Heizoberfläche (27) des zweiten Heizelements in dem Hohlraum definiert ist.

5. Grill nach Anspruch 4, wobei das zweite Heizelement (22) einen Basisteil (25) und eine Seitenwand (26) umfasst, die von dem Basisteil hochsteht und sich um diesen erstreckt, um den Hohlraum (24) auszubilden, wobei die zweite Heizoberfläche (27) durch den Basisteil gebildet wird.

6. Grill nach Anspruch 5, wobei die Dicke der Seitenwand weniger als oder gleich 3 mm beträgt.

7. Grill nach Anspruch 1, wobei in dem ersten Heizelement (3) eine Öffnung (8) ausgebildet ist und das zweite Heizelement (22) in der Öffnung aufgenommen wird.

8. Grill nach Anspruch 1, wobei das zweite Heizelement (22) von dem ersten Heizelement (3) beabstandet ist.

9. Grill nach Anspruch 1, wobei das erste Heizelement (3) von der Heizvorrichtung (4) beabstandet ist.

10. Grill nach Anspruch 1, der so eingerichtet ist, dass er Wärme durch Fortleitung von der Heizvorrichtung (4) zu dem zweiten Heizelement (22) überträgt.

11. Grill nach Anspruch 1, wobei in dem zweiten Heizelement (22) ein Kanal (32) ausgebildet ist, der so ausgeführt ist, dass er einen Teil der Heizvorrichtung (4) aufnimmt.

12. Grill nach Anspruch 1, der weiterhin eine Steuereinrichtung umfasst, die so eingerichtet ist, dass sie den Betrieb der Heizvorrichtung (4) steuert.

13. Grill nach Anspruch 12, der weiterhin einen Sensor umfasst, wobei die Steuereinrichtung so eingerichtet ist, dass sie auf die Heizvorrichtung (4) so einwirkt, dass diese die Temperatur der ersten Heizoberfläche (5) in Reaktion auf die von dem Sensor ermittelte Temperatur steuert.

14. Grill nach Anspruch 1, wobei das erste Heizelement (3) und das zweite Heizelement (22) so eingerichtet sind, dass die zweite Heizoberfläche (27) in einem Temperaturbereich zwischen 270°C und 400°C arbeitet, wenn die erste Heizoberfläche (5) in einem Temperaturbereich zwischen 200°C und 270°C arbeitet.

15. Grill nach Anspruch 1, der weiterhin eine Vertiefung in der ersten Heizoberfläche und eine in der Vertiefung definierte dritte Heizoberfläche umfasst.

## Revendications

1. Gril (1) comprenant un premier élément chauffé (3) possédant une première surface chauffée (5), un second élément chauffé (22) possédant une deuxième surface chauffée (27), et un dispositif chauffant (4) configuré pour chauffer à la fois le premier élément chauffé et le second élément chauffé, **caractérisé en ce que** la distance entre le premier élément chauffé (3) et le dispositif chauffant (4) est supérieure à la distance entre le second élément chauffé (22) et le dispositif chauffant (4) pour que la puissance appliquée sur le second élément chauffé par superficie unitaire de la deuxième surface chauffée (27) soit supérieure à la puissance appliquée sur le premier élément chauffé par superficie unitaire de la première surface chauffée (5).

2. Gril selon la revendication 1, dans lequel le rapport de la puissance appliquée sur le second élément chauffé (22) par superficie unitaire de la deuxième surface chauffée (27) par rapport à la puissance appliquée sur le premier élément chauffé (3) par superficie unitaire de la première surface chauffée (5) est au moins 1,4:1.

3. Gril selon la revendication 1, dans lequel le rapport de la puissance appliquée sur le second élément chauffé (22) par superficie unitaire de la deuxième surface chauffée (27) par rapport à la puissance appliquée sur le premier élément chauffé (3) par superficie unitaire de la première surface chauffée (5) est inférieur à 3:1.

4. Gril selon la revendication 1, dans lequel une cavité (24) est formée dans le second élément chauffé (22) et la deuxième surface chauffée (27) du second élément chauffé est définie dans la cavité.

5. Gril selon la revendication 4, dans lequel le second élément chauffé (22) comprend une partie de base (25) et une paroi latérale (26) verticale à partir de, et s'étendant autour de, la partie de base pour former la cavité (24), la deuxième surface chauffée (27) étant formée par la partie de base.

6. Gril selon la revendication 5, dans lequel l'épaisseur de la paroi latérale est inférieure ou égale à 3 mm.

7. Gril selon la revendication 1, dans lequel une ouverture (8) est formée dans le premier élément chauffé (3) et le second élément chauffé (22) est reçu dans l'ouverture.

8. Gril selon la revendication 1, dans lequel le second élément chauffé (22) est espacé du premier élément chauffé (3).

9. Gril selon la revendication 1, dans lequel le premier élément chauffé (3) est espacé du dispositif chauffant (4).

10. Gril selon la revendication 1, configuré pour transférer de la chaleur du dispositif chauffant (4) au second élément chauffé (22) par conduction.

11. Gril selon la revendication 1, dans lequel un canal (32) est formé dans le second élément chauffé (22) qui est configuré pour recevoir une section du dispositif chauffant (4).

12. Gril selon la revendication 1, comprenant en outre un dispositif de commande configuré pour commander le fonctionnement du dispositif chauffant (4).

13. Gril selon la revendication 12, comprenant en outre un capteur, dans lequel le dispositif de commande est configuré pour faire fonctionner le dispositif chauffant (4) pour commander la température de la première surface chauffée (5) en réponse à la température déterminée par le capteur.

14. Gril selon la revendication 1, le premier élément chauffé (3) et le second élément chauffé (22) étant configurés pour que la deuxième surface chauffée (27) fonctionne dans une plage de température entre 270°C et 400°C lorsque la première surface chauffée (5) fonctionne dans une plage de température entre 200°C et 270°C.

15. Gril selon la revendication 1, comprenant en outre un évidement dans la première surface chauffée et une troisième surface chauffée définie dans l'évidement.
